# EUROPÄISCHE PATENTANMELDUNG

(11) **EP 2 538 209 A2**
(43) Veröffentlichungstag der Anmeldung: **26.12.2012**
(21) Anmeldenummer: 12004373.2
(22) Anmeldetag: 06.06.2012
(51) Int. Cl.: G01N 27/87, G01N 27/90

(54) **Vorrichtung zur zerstörungsfreien Prüfung von metallischem Langgut sowie Verwendung der Vorrichtung**

(30) Priorität: 20.06.2011 DE 102011104848
(71) Anmelder: Fraunhofer Gesellschaft zur Förderung der angewandten Wissenschaft E.V., 80686 München (DE)
(72) Erfinder: Both, Norbert, 66636 Theley (DE); Niese, Frank, 66125 Saarbrücken (DE)
(74) Vertreter: Rösler, Uwe

(57) **Zusammenfassung**

Beschrieben wird eine Vorrichtung zur zerstörungsfreien Prüfung von metallischem Langgut (1), insbesondere in Form eines Metalldrahtes, -seils oder -stabes, zumindest mit wenigstens einer längs des Abschnittes anordenbaren und das metallische Langgut längs seines Umfangs vollständig umfassenden HF-Spulenanordnung (7), die aus wenigstens zwei Spulensegmenten (71, 72) besteht, die räumlich zumindest teilweise voneinander separierbar und wieder zusammenfügbar. Die Spulensegmente weisen jeweils eine, zu einem peripheren Teilumfangsbereich des Langgutes gegenkonturiert ausgebildete Geometrie auf, sodass sie im zusammengefügten Zustand gemeinsam den gesamten peripheren Umfang des metallischen Langgutes umschließen, und sind mit wenigstens einem ersten Spulendraht (8) derart umwickelt sind, dass der Spulendraht jeweils eine Teilwindungsanordnung mit n ≥ 1 Teilwindungen (8K, 8K') bildet, wobei im zusammengefügten Zustand der Spulensegmente die Teilwindungsanordnungen in Umfangsrichtung des peripheren Umfanges des metallischen Langgutes unmittelbar aneinandergrenzen und mit einer einheitlich um das Langgut orientierten Stromflussrichtung beaufschlagbar sind.

## Beschreibung

### Technisches Gebiet

Die Erfindung bezieht sich auf eine Vorrichtung zur zerstörungsfreien Prüfung von metallischem Langgut, insbesondere in Form eines Metalldrahtes, -seils oder -stabes, zumindest mit wenigstens einer längs des Abschnittes anordenbaren und das metallische Langgut längs seines Umfangs vollständig umfassenden HF-Spulenanordnung.

### Stand der Technik

Metallisches Langgut, in Form von Metalldrähten, Metallseilen oder Metallstäben werden zu vielfältigsten technischen Aufgabe eingesetzt, so beispielsweise zur Übertragung elektrischer Energie, für Trag-, Spann- oder Haltefunktionen, um nur einige zu nennen. Insbesondere sei repräsentativ für metallisches Langgut auf Spanndrähte verwiesen, die zur Befestigung von Ampelanlagen, Verkehrsschilder, Lichtmasten etc. eingesetzt werden und die u.a. Umwelteinflüssen ausgesetzt sind, die zur Korrosion der Spanndrähte führen können. Die Korrosion führt punktuell oder flächig zu einem Materialabtrag und damit zu einem Verlust an Zugfestigkeit der Spanndrähte. Hierdurch kann die Standfestigkeit der vorstehend genannten Anlagen und Aufbauten erheblich eingeschränkt oder sogar nicht mehr gewährleistet sein. Im Versagensfall kann es neben materiellen Schäden auch zu Personenschäden kommen, so dass es erforderlich ist, derartige Abspanneinrichtungen einer entsprechenden Überprüfung zu unterziehen.

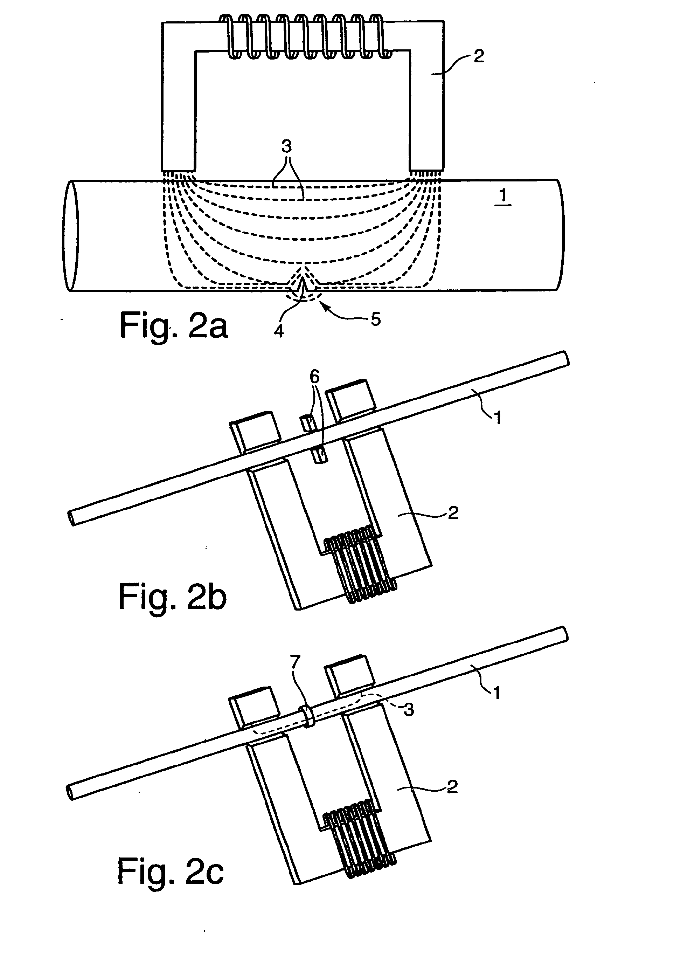

Ein hierfür gängiges Verfahren stellt das so genannte magnetische Streuflussverfahren, kurz MFL (Magnetic Flux Leakage), dar, das in an sich bekannter Weise an ferromagnetischem, metallischem Langgut angewendet werden kann. Zur Illustration des bekannten magnetischen Streuflussverfahrens sei auf die Figuren 2a, b und c verwiesen. Figur 2a zeigt einen Teilabschnitt eines ferromagnetischen Spanndrahtes 1, in dem mit Hilfe einer Magnetisierungseinheit 2 Magnetfeldlinien in axialer Richtung längs des Spanndrahtes 1 eingekoppelt werden. Die Magnetisierungseinheit 2 lässt sich als Permanentmagnet oder als Elektromagnet ausbilden. Liegt im magnetisierten Bereich des Spanndrahtes 1 eine Oberflächenschädigung, beispielsweise in Form einer Querschnittsreduzierung 3 vor, so treten dort magnetische Streufelder 4 aus dem Material des Spanndrahtes 1 aus, die mit geeigneten, über den Umfang verteilten Magnetfeldsensoren detektiert werden können.

Als Magnetfeldsensoren kommen beispielsweise Hall-Sonden 6 zum Einsatz (siehe Figur 2b), die möglichst gleich verteilt um den Spanndraht 1 anzuordnen sind. Eine derartige Vorgehensweise birgt jedoch den Nachteil in sich, dass die Hall-Sonden lediglich auf einem örtlich begrenzten Umfangsbereich die aus dem Spanndraht austretenden Feldlinien zu erfassen vermögen, hinzukommt, dass die Detektionsempfindlichkeit von der Abhebung bzw. dem Abstand der Hall-Sonden zum Spanndraht stark variiert. Zudem ergibt sich durch die Anordnung mehrerer Hall-Sonden 6 um den Umfang des Spanndrahtes verteilt keine eindeutige Aussage, beispielsweise über die Restmaterialstärke des untersuchten Spanndrahtes 1.

Gilt es hingegen nicht ferromagnetische, metallische Drahtwerkstoffe zu untersuchen, so wird ein anderes elektromagnetisches Prüfverfahren, das so genannte Wirbelstromverfahren eingesetzt. Hier wird mit Hilfe einer den Spanndraht vollständig umgebenden HF-Spulenanordnung ein axial längs zum Spanndraht orientiertes höherfrequentes Magnetfeld erzeugt. Durch die mittels des höherfrequenten Magnetfeldes innerhalb des Spanndrahtes induzierten Wirbelströme, wird im Spanndraht wiederum ein oszillierendes Magnetfeld erzeugt, das durch Materialungänzen beeinflusst wird und dem durch die HF-Spulenanordnung erzeugten höherfrequenten Magnetfeld entgegenwirkt.

Nachteilhaft ist jedoch, dass es für beide der vorstehend skizzierten Prüfverfahren erforderlich ist, eine den Spanndraht längs seines Umfanges vollständig umfassende Sensoranordnung vorzusehen. Da jedoch in den häufigsten Fällen Spanndrähte oder ähnliches metallisches Langgut von ihren Endseiten nicht zugänglich sind, ist es problematisch bzw. unmöglich, beispielsweise eine in sich ringförmig geschlossene HF-Spulenanordnung über einen beispielsweise Spanndraht, der zu Befestigungszwecke beidseitig mit festen Gegenlagern verbunden ist, zu führen.

Die Druckschrift von Heptner/Stroppe "Magnetische und magnetinduktive Werkstoffprüfung", 3. Auflage, 1973, zeigt auf Seite 126, Bild 3.103, das Schema einer sog. Vetcoscope-Prüfeinrichtung, mit der Querrisse, z.B. in Bohrgestängen, nachgewiesen werden können. Die Vorrichtung umfasst eine räumlich nicht separierbare, das Langgut vollständig umfassende Magnetisierungsspule, die zusammen mit zwei in axialem Abstand und in Umfangsrichtung zueinander versetzten, um das Rohr angeordneten Spulenabtastsystemen über das Rohr bewegt wird. Jedes Spulensystem besteht dabei aus mehreren Sonden. Die Fehleraufzeichnung erfolgt für jedes Spulensystem getrennt.

Die Druckschrift US 3,887,865 A zeigt in Fig. 5 eine Wirbelstromprüfvorrichtung, mit der besonders vorteilhaft Langgut untersucht werden kann, das Bereiche mit unterschiedlich großem Querschnitt aufweist. Die Vorrichtung weist ein Gehäuse mit einer zentralen Öffnung auf, durch die das zu prüfende Langgut geführt wird. Im Gehäuse befindet sich eine Spule, deren Windungen die Öffnung in Umfangsrichtung umschließen. In der Öffnung sind zwei leitende, gegenseitig isolierte sog. "Monoturn"-Elemente angeordnet, die in einer Ebene senkrecht zur SymmetrieAchse der Öffnung jeweils die Hälfte der Öffnung bis auf einen Durchlass für das zu untersuchende Langgut ausfüllen. In diesen Monoturn-Elementen wird mittels der Spule jeweils ein Strom induziert. In den dem Langgut zugewandten Oberflächen fließt dabei der Strom in einheitlicher Richtung.

### Darstellung der Erfindung

Der Erfindung liegt die Aufgabe zugrunde, eine Vorrichtung zur zerstörungsfreien Prüfung von metallischem Langgut, insbesondere in Form eines Metalldrahtes, eines Metallseils oder eines Metallstabes, zumindest mit wenigstens einer längs des Abschnittes anordenbaren und das metallische Langgut längs seines Umfanges vollständig umfassenden HF-Spulenanordnung, derart weiterzubilden, dass dafür gesorgt ist, dass Beschädigungen am gesamten Umfang des Langgutes oder innerhalb des Langgutes, bedingt beispielsweise durch Rost, Rissbildung, Abschalungen etc., exakt lokalisiert und quantifiziert werden können. Die Vorrichtung soll als portabel handhabbare Prüfeinrichtung ausgebildet sein, die längs eines entsprechend ausgebildeten Langgutes zur Messdurchführung direkt an das zu untersuchende Langgut applizierbar ist.

Die Lösung der der Erfindung zugrunde liegenden Aufgabe ist im Anspruch 1 angegeben. Den Lösungsgedanken in vorteilhafter Weise weiterbildende Merkmale sind Gegenstand der Unteransprüche sowie der weiteren Beschreibung insbesondere unter Bezugnahme auf die Ausführungsbeispiele zu entnehmen.

Die lösungsgemäße Vorrichtung zur zerstörungsfreien Prüfung von metallischem Langgut gemäß den Merkmalen des Oberbegriffes des Anspruches 1 zeichnet sich dadurch aus, dass die HF-Spulenanordnung aus wenigstens zwei Spulensegmenten besteht, die räumlich zumindest teilweise voneinander separierbar sind, so dass die Spulensegmente seitlich zur Längserstreckung des Langgutes innerhalb des Abschnittes an einen dem Langgut zuordenbaren peripheren Umfangsbereich aufsetzbar und einander derart zusammenfügbar sind, so dass die Spulensegmente die das metallische Langgut umfassende HF-Spulenanordnung bilden.

Der Kern der lösungsgemäßen Vorrichtung besteht in einer segmentierten Ausbildung der HF-Spulenanordnung, die es erlaubt, in einem geöffneten bzw. aufgeklappten Zustand die entsprechenden HF-Spulensegmente seitlich längs des zu untersuchenden metallischen Langgutes aufzusetzen und durch gegenseitiges Verschließen der HF-Spulensegmente eine das Langgut vollständig ringartig umschließende HF-Spulenanordnung zu bilden.

Eine bevorzugte Ausführungsform sieht eine Unterteilung der HF-Spulenanordnung in zwei Spulensegmente vor, die jeweils einen aus dielektrischem Material bestehenden Spulenträger aufweisen, in dem jeweils eine Trägerkontur eingeprägt ist, die jeweils gegenkonturiert zum hälftigen Umfangsrand des Langgutes ausgebildet ist, so dass das Langgut bei entsprechendem Zusammenfügen beider Spulenträger von diesen vollständig umschlossen wird. Zusätzlich weisen beide Spulenträger ein Verriegelungsmittel auf, durch das die Spulenträger räumlich zueinander exakt ausgerichtet und einen robusten, mechanisch belastbaren Fügezustand einnehmen. Selbstverständlich ist eine Unterteilung der HF-Spulenanordnung auch in mehrere Spulensegmente möglich, die Anzahl geeigneter Spulensegmente richtet sich vornehmlich nach der Größe und Umfangsform des jeweils zu untersuchenden metallischen Langgutes.

Ferner sind die zwei dielektrischen Spulenträger, um auf die Erläuterung des vorstehenden Ausführungsbeispiels zurückzukommen, mit wenigstens einem durchgängigen oder jeweils separaten Spulendraht derart umwickelt, so dass der Spulendraht jeweils längs eines Spulenträgerbereiches, der dem Umfang des Langgutes entsprechend gegenkonturiert ausgebildet ist, eine Teilwindungsanordnung mit wenigstens einer, vorzugsweise mit einer Vielzahl einzelner Teilwindungen bildet, die im zusammengefügten Zustand beider Spulenträger eine mit einheitlicher Stromflussrichtung durchflossene, vollständig ringförmig ausgebildete HF-Spulenanordnung bildet. Im Falle der Umwicklung der einzelnen Spulensegmente jeweils mit einem separaten Spulendraht bilden sich zwei getrennte Einzelspulenanordnungen mit dem vorstehend beschriebenen Wickelmuster aus. Um dafür zu sorgen, dass beide Einzelspulenanordnungen vom gleichen Strom mit einheitlicher Stromrichtung durchflossen werden, sind beide Einzelspulenanordnungen über eine Verbindungsleitung in Reihe zu schalten.

Der hierbei erforderliche Verlegungsweg des einheitlich durchgängigen Spulendrahtes bzw. der in Reihe miteinander geschalteten Einzelspulenanordnungen wird aus Gründen einer erleichterten Beschreibung nachstehend unter Bezugnahme auf die Illustration des Ausführungsbeispiels erläutert. Grundsätzlich richtet sich der Verlauf des Spulendrahtes um die jeweiligen einzelnen Spulenträger nach der Formgebung sowie auch der Anzahl der miteinander, um das metallische Langgut zu fügenden einzelnen Spulenträger.

Durch die lösungsgemäße segmentierte Ausbildung der HF-Spulenanordnung ist es möglich, "unendlich" lang ausgedehnte Spanndrähte o.ä. metallisches Langgut mit einer das jeweilige zu untersuchendes Langgut vollständig umfassenden Sensoranordnung auf Basis von Wirbelstrom- oder Streuflusstechniken zu überprüfen.

Handelt es sich bei dem zu überprüfenden Langgut um nicht ferromagnetisches metalisches Langgut, so erfolgt die Prüfung ausschließlich mit Hilfe der HF-Spulenanordnung unter Nutzung der Wirbelstromtechnik, bei der das Langgut mit Hilfe einer lösungsgemäß ausgebildeten HF-Erregerspulenanordnung einem sich zeitlich ändernden Magnetfeld ausgesetzt wird, wodurch sich innerhalb des Langgutes aufgrund von Induktion Wirbelströme ausbilden, die ihrerseits ein Magnetfeld erzeugen, das gemäß der Lenzschen Regel der Änderung des sich zeitlich ändernden Magnetfeldes entgegenwirkt und darüber hinaus dem Einfluss von etwaigen innerhalb des Langgutes vorhandenen Materialungänzen ausgesetzt ist. Zur messtechnischen Erfassung der sich durch die Wirbelströme ausbildenden und von Materialungänzen innerhalb des Langgutes beeinflussbaren Magnetfelder kann entweder die HF-Erregerspulenanordnung oder eine oder mehrere separate Spulenanordnungen als Empfangsspulenanordnung dienen. Hierzu ist eine separate Empfangsspulenanordnung gleichsam lösungsgemäß ausgebildet und vorzugsweise mit einer Differenz- Empfangseinheit verbunden.

Im Falle von ferromagnetischem, metallischem Langgut erfolgt die Prüfung mit Hilfe der lösungsgemäß ausgebildeten HF-Spulenanordnung in Verbindung mit einer Magnetisierungseinheit, die längs des Langgutes anordenbar ist und längs des Langgutes orientierte magnetische Feldlinien einkoppelt. Hierzu ist die Magnetisierungseinheit als eine U-förmige Permanent- oder Elektromagneteinheit mit zwei magnetisch gegenpolarisierten U-Schenkelenden ausgebildet, wobei zwischen den U-Schenkelenden der Magnetisierungseinheit die wenigstens zwei Spulensegmente der lösungsgemäß ausgebildeten HF-Spulenanordnung längsverschieblich zum Langgut angeordnet sind.

In beiden vorstehenden Prüfsituationen wird durch die vollständige Umfassung der zu untersuchenden Drähte oder Stäbe mit Hilfe der lösungsgemäß ausgebildeten HF-Spulenanordnung eine integrale Prüfaussage über den gesamten Querschnitt des jeweiligen Prüfobjektes möglich. Bei den bisher üblichen Prüftechniken, bei denen beispielsweise Hall-Sonden zum Einsatz kommen, können dagegen lediglich lokal begrenzte Umfangsbereiche messtechnisch erfasst werden.

Zur weiteren Erläuterung der lösungsgemäßen Vorrichtung zur zerstörungsfreien Prüfung von metallischem Langgut sei auf die nachstehenden Figuren verwiesen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1 a,b: Magnetisierungseinheit mit einer lösungsgemäß ausgebildeten HF-Spulenanordnung zur Durchführung einer Streuflussprüfung an einem ferromagnetischen metallischen Langgut,
- Fig. 2a: Illustration des Prinzips der Streuflussprüfung (Stand der Technik),
- Fig. 2b: Illustration zur Streuflussmessung mit Hall-Sensoren (Stand der Technik),
- Fig. 2c: Illustration der Streuflussmessung mit konventioneller, das Langgut vollständig umfassenden HF-Spulenanordnung (Stand der Technik),
- Fig. 3: schematisierte Darstellung zweier Spulensegmente in Frontal- und Seitendarstellung,
- Fig. 4: Spulendrahtverlegeplan zur Durchführung einer Differenzwirbelstrommessung an einem nicht ferromagnetischen metallischen Langgut, sowie
- Fig. 5a,b: HF-Spulenanordnung mit segmentierten Spulenträger.

### Wege zur Ausführung der Erfindung, gewerbliche Verwendbarkeit

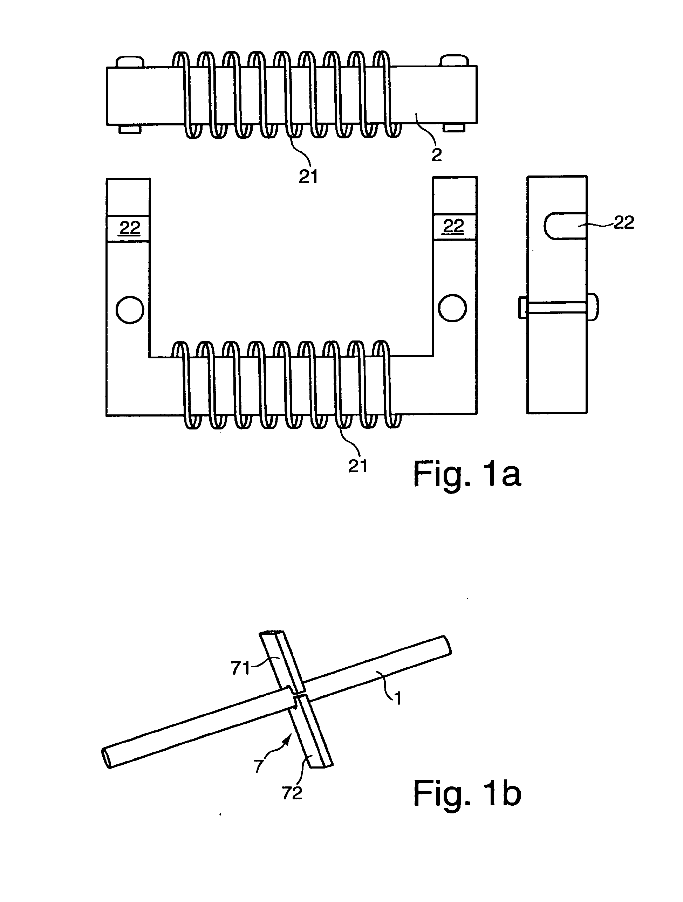

Die Figuren 1 a und 1 b zeigen die Einzelkomponenten zur Überprüfung eines metallischen, ferromagnetischen Langgutes auf der Grundlage des Streuflussverfahrens.

In Figur 1a ist in einer 3-Seiten-Darstellung eine Magnetisierungseinheit 2 dargestellt, die über einen U-förmigen Kern verfügt, um dessen Längsschenkel eine Erregerspule 21 gewickelt ist, mittels der ein niederfrequentes magnetisches Wechselfeld, typischerweise mit einer Magnetisierungsfrequenz zwischen 10 und 50 Hz, erzeugbar ist. Im Bereich beider U-Schenkelenden ist jeweils eine nutförmige Einkerbung 22 eingebracht, deren Form und Größe an die Umfangskontur eines zu untersuchenden metallischen, ferromagnetischen Langgutes, beispielsweise in Form eines Spanndrahtes 1, angepasst ist, so dass der Spanndraht 1 möglichst konturgetreu in die seitlich geöffneten nutförmigen Ausnehmungen 22 einfügbar ist. Der Abstand zwischen beiden Schenkeln des U-Kerns ist dabei so groß zu wählen, dass längs des zu untersuchenden Spanndrahtes 1 eine maximale axial gerichtete magnetische Feldlinieneinkopplung erfolgen kann. Der Anteil möglicherweise auftretender Streufelder außerhalb des zu untersuchenden Spanndrahtabschnittes 1 sollte gegenüber dem in den Spanndraht 1 eingekoppelten Magnetfeld klein sein. Je nach Form, Größe und Material des zu untersuchenden Langgutes ist der Abstand zwischen beiden U-Kernschenkel individuell, vorzugsweise experimentell zu ermitteln.

Da die illustrierte Magnetisierungseinheit als Elektromagneteinheit ausgebildet ist und somit längs des zu untersuchenden Spanndrahtes 1 eine Wechselstrommagnetisierung hervorruft, ist eine umfassende Magnetisierung des zu prüfenden Spanndrahtabschnittes nicht erforderlich, da sich bei einer Wechselstrommagnetisierung aufgrund des Skineffektes eine gleichmäßige Feldstärke an der gesamten Oberfläche des zu untersuchenden Spanndrahtabschnittes einstellt.

Gleichwohl gilt es, die sich um den zu untersuchenden Abschnitt des Spanndrahtes 1 einstellenden magnetischen Verhältnisse möglichst voll umfänglich zu erfassen. Hierzu wird zwischen den Schenkeln des U-Kerns der Magnetisierungseinheit 2 eine in Figur 1b gezeigt segmentierte HF-Spulenanordnung angeordnet, in der durch das magnetische Wechselfeld eine sinusförmige Wechselspannung induziert wird.

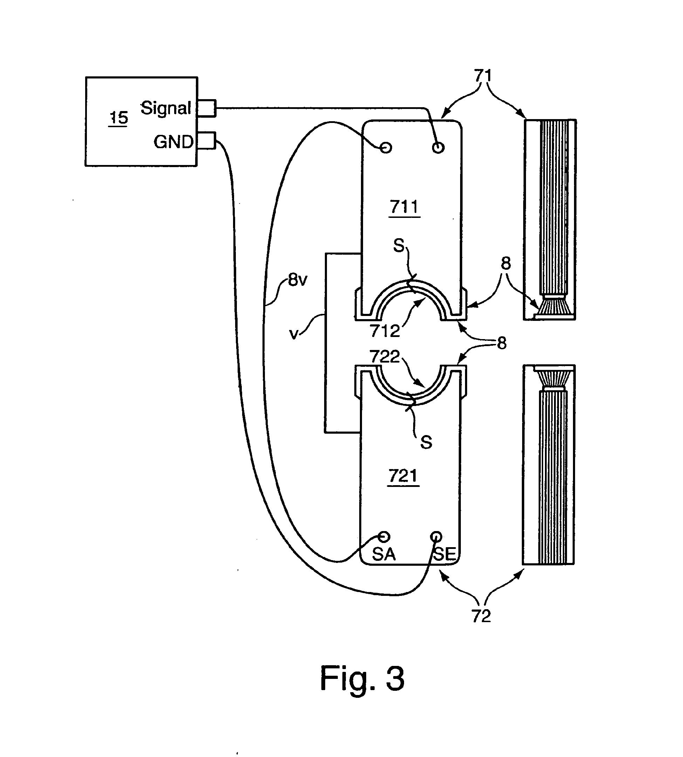

Da es bei der hier zugrunde liegenden Prüfaufgabe, bspw. der Prüfung von Spanndrähten nicht möglich ist, eine vollständig geschlossene den Spanndraht voll umfänglich umfassende Spule anzubringen, ist die in Figur 1b dargestellte HF-Spulenanordnung 7 segmentiert, d.h. geteilt ausgeführt. Die lösungsgemäße HF-Spulenanordnung besteht im Ausführungsbeispiel gemäß Figur 1b aus zwei Spulensegmenten 71, 72, die als zwei getrennte Bauteile handhabbar sind und seitlich längs des Umfanges des Spanndrahtes 1 zusammengefügt werden können, um so den Spanndraht 1 vollständig zu umschließen. Die Spulensegmente 71, 72 sind detailliert in Figur 3 in Form einer Front- und Seitenansicht illustriert. Beide Spulensegmente 71, 72 weisen jeweils einen aus dielektrischem Material gefertigten Spulenträger 711, 721 auf, der im dargestellten Fall als rechteckförmiges Flachelement ausgebildet ist. Jeder der beiden Spulenträger 711, 721 verfügt über eine gegenkonturiert an den hälftigen Umfang des zu prüfenden Spanndrahtes angepasste Aufnahmekontur 712, 722, die im gezeigten Ausführungsbeispiel halbkreisförmig ausgebildet ist.

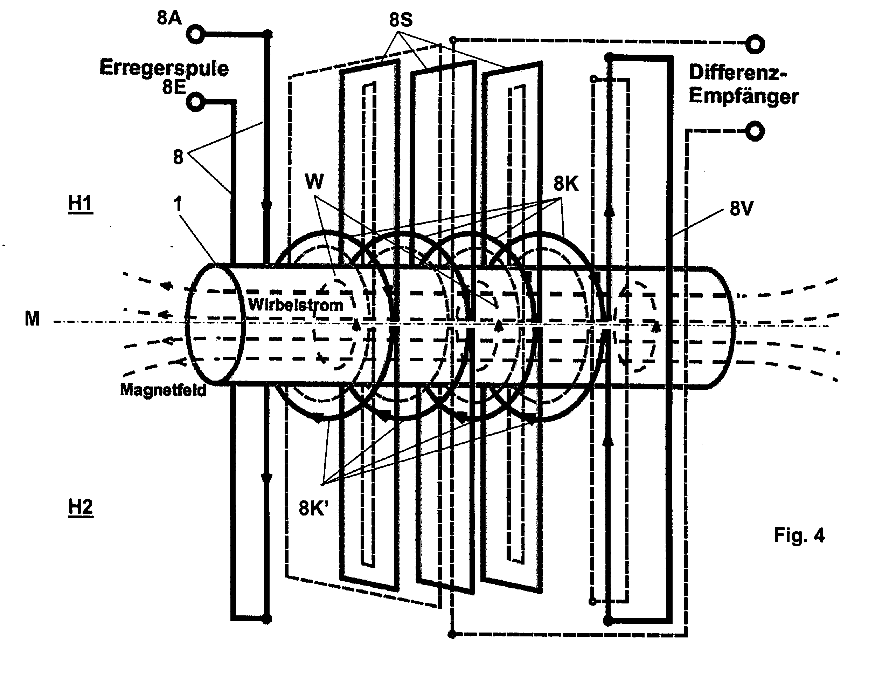

Längs beider Umfangsränder der einzelnen Spulenträger 711, 721 ist jeweils wenigstens ein Spulendraht derart umlaufend gewickelt angeordnet, so dass der Spulendraht 8 jeweils längs der Aufnahmekontur 712, 722 jedes Spulenträgers 711, 721 eine Teilwindungsanordnung mit n ≥ 1 Teilwindungen bildet, die im zusammengefügten Zustand der Spulenträger 711, 721 in Umfangsrichtung des peripheren Umfanges des Spanndrahtes unmittelbar aneinandergrenzen und mit einer einheitlichen um den Spanndraht orientierten Stromflussrichtung S beaufschlagbar sind. Die genaue Verlegeanordnung des Spulendrahtes 8 um die Spulenträger 711, 721 wird später in Verbindung mit Figur 4 näher erläutert. Grundsätzlich ist es möglich die wenigstens zwei getrennten Spulenträger 711, 721 mit einem einstückigen Spulendraht 8 zu umwickeln, wobei zunächst einer von beiden Spulenträger mit dem Draht nach einem geordnet vorgegebenen Wicklungsmuster umwickelt wird und im Anschluss daran der andere Spulenträger. In Figur 3 ist gezeigt, dass beide Spulenträger 711, 721 jeweils mit einem separaten Spulendraht umwickelt sind und jeweils über einen Anschluss für eine Spulenanfang SA und ein Spulenende SE verfügen. Beide Spulenelemente 71, 72 sind über eine Verbindungsleitung 8V in Reihe geschaltet, um so von einem Strom mit einheitlicher Stromrichtung durchflossen zu werden. Die Anschlüsse des Spulenanfangs SA des Spulenelementes 71 sowie des Spulenendes SE des Spulenelementes 72 sind mit einem HF-Signalgenerators 15 verbunden, um als HF-Sendespulenanordnung zu dienen.

In gleicher Weise können zur Ausbildung einer Empfangsspulenanordnung die Anschlüsse SA, SE der Spulenelemente 71, 72 mit einer Empfangseinheit, bspw. einer Differenzempfangseinheit, verbunden werden. Da die Empfangsempfindlichkeit der Spulenanordnung insbesondere im Wirbelstromfall mit steigendem Abstand zwischen dem Prüfling zum Spulendraht sehr stark abnimmt, liefern Spulenteile mit höherem Abstand zum Prüfling keinen Einfluss auf das Messergebnis. Somit wird durch eine Einzelverbindung 8V zwischen den Spulenträgern 711 und 721 eine Störeinkopplungen in Leitungsbereichen des Spulendrahtes stark verringert.

Zur Untersuchung bspw. eines Spanndrahtes ist es erforderlich beide um den Spanndraht zusammengefügte Spulensegmente 71, 72 längs des Spanndrahtes zu verschieben. Dies setzt für eine praxistauglichen Handhabung eine stabile mechanische Fügung beider Spulensegmente 71, 72 voraus. Um dies zu gewährleisten sind geeignete Verbindungsmittel V an beiden Spulensegmenten 71, 72 vorgesehen, die einen zuverlässigen, mechanisch robusten Zusammenhalt zwischen beiden Spulensegmenten 71, 72 gewähren.

Zur näheren Erläuterung der Verlegeweise des Spulendrahtes um die in Figur 3 dargestellten Spulenträger 711, 721 sei auf Figur 4 verwiesen. Figur 4 zeigt einen Abschnitt eines zu untersuchenden Spanndrahtes 1, um den zunächst ein erster Spulendraht 8 verlegt ist. Aus Gründen einer besseren Übersicht ist auf die Darstellung der Spulenträger 711 und 721 verzichtet worden.

Die Verlegung des Spulendrahtes 8 erfolgt beginnend mit dem als 8A gekennzeichneten Drahtanfang zunächst ausschließlich innerhalb der oberen Halbebene H1, die durch die horizontal durch den Spanndraht verlaufende Mittelebene M einseitig begrenzt ist. Der in der oberen Halbebene H1 verlaufende Spulendraht 8 ist dem in Figur 3 oberen Spulenträger 71 zuzuordnen und entsprechend längs seiner Außenkontur verlegt. Hierbei umgibt der Spulendraht 8 die obere Hälfte des aus Figur 4 entnehmbaren Umfangs des Spanndrahtes 1 mit jeweils halbkreisförmigen Spulendrahtabschnitten 8K, die jeweils über U-förmige Verbindungsabschnitte 8S verbunden sind.

Am rechten Rand des in Figur 4 dargestellten Spulendrahtverlaufes erfolgt längs des Leitungsabschnittes 8V der Übergang vom oberen Spulenträger 71 zum unteren Spulenträger 72 (nicht in Fig. 4 dargestellt) bzw. von der oberen Halbebene H1 zur unteren Halbebene H2, in der der Spulendraht 8 in spiegelbildlicher Weise um den unteren, nicht dargestellten Spulenträger umwickelt wird und somit am unteren Umfang des Spanndrahtes 1 in Form von halbkreisförmigen Spulendrahtabschnitten 8K' zur Anlage kommt. Das Ende des Spulendrahtes 8E kann vom unteren Spulenträger in geeigneter Weise nach oben rückgeführt werden. Aus dem in Figur 4 entnehmbaren Verlegeplan für den Spulendraht 8 kann entnommen werden, dass längs des Spanndrahtabschnittes 1 durch Zusammenfügen der beiden Spulenträger jeweils mit einheitlicher Stromflussrichtung durchflossene ringförmig ausgebildete Spulenwicklungen 8K+8K' nachgebildet sind, im gezeigten Ausführungsbeispiel sind hiervon vier Spulenwicklungen 8K+8K' realisiert.

Mit Hilfe einer derartigen HF-Spulenanordnung i.V.m. einer entsprechenden Magnetisierungseinheit gem. Fig. 1 lassen sich Oberflächenirritationen an einem ferromagnetischen Langgut, beispielsweise wie vorstehend beschrieben an Spanndrähten im Wege der bekannten Streuflussmessung erfassen.

Handelt es sich bei dem zu überprüfenden metallischem Langgut um unmagnetische, elektrisch leitende Werkstoffe, so ist auf die Wirbelstromtechnik zurückzugreifen. Hierzu gilt es in den zu untersuchenden Abschnitt des Spanndrahtes 8 ein hochfrequentes elektromagnetisches Wechselfeld Feld einzukopplen, das Wirbelströme innerhalb des Spanndrahtes hervorruft, deren Ausprägung durch mögliche Materialungänzen innerhalb des Spanndrahtes beeinflusst wird.

Somit ist die erläuterte Spulendrahtwicklung 8 an ihren Anschlüssen 8A, 8E mit einer geeigneten hochfrequenten Wechselspannungsquelle zu verbinden, so dass der erläuterte Spulendraht 8 als Erregerspule dient. Die Wechselspannungsquelle kann je nach Bedarf ein kontinuierliches Wechselspannungssignal, einen Anregungsimpuls oder ein Anregungssignal in Form eines Burstsignals abgeben. Zur Detektion etwaiger Materialungänzen innerhalb des Spanndrahtes 1 gilt es zusätzlich zur Erregerspule eine Empfängerspulenwicklung 9 um beide vorstehend erläuterte Spulenträger 71, 72 anzubringen, die in Figur 4 strichliert dargestellt ist. Trotz unterschiedlicher Wicklungsabfolge der Empfängerspule 9 relativ zur Erregerspule 8, erfolgt die Verlegung der Empfängerspule 9 gleichsam getrennt relativ zur oberen und unteren Halbebene H1, H2, wie dies aus Figur 4 ersichtlich ist.

Mit Hilfe der Empfängerspule 9 ist es möglich, die sich in Gegenwart des axial längs des Spanndrahtes 1 vorherrschenden Magnetfeldes ausbildenden Wirbelströme W zu erfassen, deren Ausbildung von etwaigen Materialungänzen längs des Spanndrahtes 1 in charakteristischer Weise beeinflusst wird. Die Empfängerspule 9 ist an ihren beiden Enden mit einem Differenzempfänger verbunden, der die empfangenen Signale einer entsprechenden Auswertung zuführt.

Somit lässt sich auch eine auf der Wirbelstromtechnik basierende HF-Spulenanordnung lösungsgemäß in wenigstens zweigeteilter Form ausbilden, um ein seitliches Ansetzen längs eines metallischen Langgutes in Fällen zu gewährleisten, in denen das Langgut über eine für die Messaufgabe unendliche Länge verfügt.

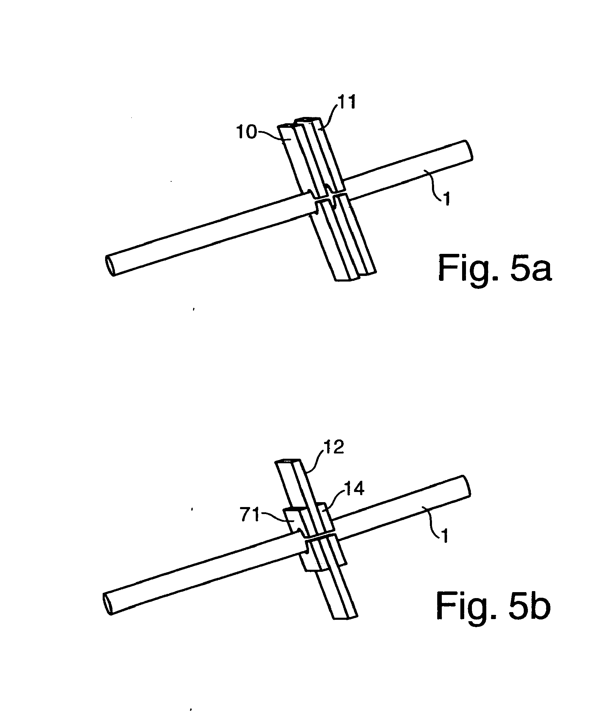

In den Figuren 5a, 5b sind weitere alternative HF-Spulenanordnungen in segmentierter Bauweise gezeigt. Beispielsweise stellt das in Figur 5a illustrierte Ausführungsbeispiel zwei unmittelbar längs eines zu untersuchenden Spanndrahtes 1 jeweils in zwei Hälften segmentierte HF-Spulenanordnungen 10, 11 dar. Hierbei dient die segmentierte HF-Spulenanordnung 10 als Sender und die HF-Spulenanordnung 11 als Empfänger. Die in Figur 5b illustrierte Variante zeigt eine mittig angebrachte Senderspule 12 mit zwei beidseitig angeordneten, kleiner ausgebildeten Empfängerspulen 13, 14.

Selbstverständlich lässt sich die lösungsgemäße HF-Spulenanordnung auch in mehr als zwei Spulensegmente unterteilen, die Anzahl etwaiger Spulensegmente richtet sich nach Form und Größe des zu untersuchenden metallischen Langgutes.

### Bezugszeichenliste

- 1: Metallisches Langgut, beispielsweise Spanndraht
- 2: Magnetisierungseinheit
- 21: Erregerspule
- 22: nutförmige Ausnehmung
- 3: Magnetfeldlinien
- 4: Materialungänze, lokale Querschnittsreduktion
- 5: Streufeld
- 6: Hall-Sensoren
- 7: HF-Spulenanordnung
- 71,72: Spulensegment
- 711,721: Spulenträger
- 712,722: gegenkonturierte Trägerstruktur
- 8: Spulendraht, Erregerspule
- 8A: Erregerspulendrahtanfang
- 8E: Erregerspulendrahtende
- 8K, 8K': Halbkreisförmiger Spulendrahtabschnitt
- 8S: U-förmiger Verbindungsabschnitt
- 8V: Verbindungsabschnitt
- 9: Empfängerspule
- 10,11,12, 13, 14: segmentierte Spulenanordnung
- 15: HF-Signalgenerator
- S: Stromflussrichtung
- H1, H2: Obere und untere Halbebene
- M: Mittenebene
- V: Verschlussmittel
- W: Wirbelstrom

## Patentansprüche

1. Vorrichtung zur zerstörungsfreien Prüfung von metallischem Langgut, insbesondere in Form eines Metalldrahtes, -seils oder -stabes, zumindest mit wenigstens einer längs des Abschnittes anordenbaren und das metallische Langgut längs seines Umfangs vollständig umfassenden HF-Spulenanordnung,
**dadurch gekennzeichnet, dass** die HF-Spulenanordnung aus wenigstens zwei Spulensegmenten besteht, die räumlich zumindest teilweise voneinander separierbar sind, so dass die Spulensegmente seitlich zur Längserstreckung des Langgutes innerhalb des Abschnittes an einen dem Langgut zuordenbaren peripheren Umfangsbereich aufsetzbar und einander derart zusammenfügbar sind, so dass die Spulensegmente die das metallische Langgut umfassende HF-Spulenanordnung bilden,
dass die wenigstens zwei Spulensegmente jeweils eine, zu einem peripheren Teilumfangsbereich des Langgutes gegenkonturiert ausgebildete Spulengeometrie aufweisen, die im zusammengefügten Zustand gemeinsam den gesamten peripheren Umfang des metallischen Langgutes umschließen, und
dass die wenigstens zwei Spulensegmente mit wenigstens einem ersten Spulendraht derart umwickelt sind, so dass der Spulendraht jeweils längs der in dem Bereich eines Spulensegmentes, der dem Langgut gegenkonturiert ausgebildet ist, eine Teilwindungsanordnung mit n ≥ 1 Teilwindungen bildet, dass im zusammengefügten Zustand der Spulensegmente die Teilwindungsanordnungen in Umfangsrichtung des peripheren Umfanges des metallischen Langgutes unmittelbar aneinandergrenzen und mit einer einheitlich um das Langgut orientierten Stromflussrichtung beaufschlagbar sind.

2. Vorrichtung nach Anspruch 1,
**dadurch gekennzeichnet, dass** die wenigstens zwei Spulensegmente mit wenigstens einem zweiten Spulendraht nach Art des ersten Spulendrahtes umwickelt sind, oder
dass wenigstens zwei weitere Spulensegmente nach Art der ersten Spulensegmente vorgesehen sind, um die wenigstens ein zweiter Spulendraht nach Art des ersten Spulendrahtes umwickelt sind, und
dass der erste Spulendraht mit einem HF-Signalquelle und der zweite Spulendraht mit einer Empfangseinheit verbunden sind.

3. Vorrichtung nach Anspruch 1 oder 2,
**dadurch gekennzeichnet, dass** der wenigstens erste Spulendraht sowohl mit einer HF-Signalquelle als auch mit einer Empfangseinheit verbunden ist.

4. Vorrichtung nach einem der Ansprüche 1 bis 3,
**dadurch gekennzeichnet, dass** die wenigstens zwei Spulensegmente getrennt voneinander jeweils von einem separaten Spulendraht zur Ausbildung zweier Einzelspulenanordnungen umwickelt sind, und
dass die Einzelspulenanordnungen in Reihe geschaltet sind.

5. Vorrichtung nach einem der Ansprüche 2 bis 4,
**dadurch gekennzeichnet, dass** die HF-Signalquelle zur Erzeugung eines kontinuierlichen Anregungssignals, eines Anregungsimpulses oder eines HF-Burstsignals in der Lage ist, und dass die Empfangseinheit ein Differenzempfänger ist.

6. Vorrichtung nach einem der Ansprüche 1 bis 5,
**dadurch gekennzeichnet, dass** die Spulensegmente jeweils einen aus dielektrischem Material bestehenden Spulenträger aufweisen, in dem jeweils ein die dem Langgut gegenkonturiert ausgebildete Spulengeometrie vorgebender Spulenträgerbereich eingebracht ist, und
dass die Spulenträger jeweils ein die Spulenträger im zusammengefügten Zustand zusammenhaltendes Verriegelungsmittel aufweisen.

7. Vorrichtung nach Anspruch 6,
**dadurch gekennzeichnet, dass** das die wenigstens zwei Spulenträger über ein Klappscharnierartig ausgebildetes Mittel zum Öffnen und Zusammenfügen der wenigstens zwei Spulenträger miteinander verbunden sind.

8. Vorrichtung nach einem der Ansprüche 1 bis 7,
**dadurch gekennzeichnet, dass** eine Magnetisierungseinheit vorgesehen und derart ausgebildet und längs des Langgutes anordenbar ist, dass sich magnetische Feldlinien zumindest innerhalb eines Abschnittes längs des Langgutes ausbilden, dass die Magnetisierungseinheit eine U-förmig ausgebildete Permanent- oder Elektromagneteinheit mit zwei magnetisch gegenpolarisierten U-Schenkelenden ist, die längs des Langgutes längsverschieblich angeordnet ist, und dass zwischen den U-Schenkelenden die wenigstens zwei Spulensegmente längsverschieblich zum Langgut angeordnet sind.

9. Verwendung der Vorrichtung nach einem der Ansprüche 1 bis 8 zur Prüfung von metallischem Langgut, insbesondere von metallischen Drähten, Seilen, Stäben auf der Grundlage des magnetischen Streuflussverfahrens oder des Wirbelstromverfahrens.

10. Verwendung nach Anspruch 9,
**dadurch gekennzeichnet, dass** als das metallische Langgut Stromleitungen, Überlandleitungen, Tragseile und -verstrebungen sowie Spanndrähte darstellt.

11. Verwendung nach Anspruch 9 oder 10,
**dadurch gekennzeichnet, dass** im Falle von nicht ferromagnetischem metalischen Langgut die Prüfung ausschließlich mit Hilfe der HF-Spulenanordnung unter Nutzung des Wirbelstromverfahrens durchgeführt wird, und dass im Falle von ferromagnetischem metallischen Langgut die Prüfung mit Hilfe der HF-Spulenanordnung und der Magnetisierungseinheit nach Anspruch 8 durchgeführt wird.
